# FASCICULE DE BREVET EUROPEEN

(11) **EP 3 027 512 B1**
(45) Date de publication et mention de la délivrance du brevet: **03.05.2017**
(21) Numéro de dépôt: 14747613.9
(22) Date de dépôt: 31.07.2014
(51) Int. Cl.: F42B 15/36, F42B 15/38, B64G 1/64

(54) **PROCEDE ET DISPOSITIF DE LIAISON ET DE SEPARATION DE DEUX ELEMENTS AVEC DES MOYENS DE LIAISON ET DE SEPARATION MELANGES**
VERFAHREN UND VORRICHTUNG ZUM VERBINDEN UND TRENNEN VON ZWEI ELEMENTEN MIT EINEM KOMBINIERTEN VERBINDUNGS- UND TRENNMITTEL
METHOD AND DEVICE FOR CONNECTING AND SEPARATING TWO ELEMENTS WITH COMBINED CONNECTING AND SEPARATING MEANS

(30) Priorité: 01.08.2013 FR 1357640
(43) Date de publication de la demande: 08.06.2016
(73) Titulaire: Airbus Safran Launchers SAS, 75015 Paris (FR)
(72) Inventeur: MEDINA, Felipe, F-78170 La Celle Saint Cloud (FR); PREAUD, Luc, F-78440 Gargenville (FR)
(74) Mandataire: Brevalex
(86) Numéro de dépôt international: PCT/EP2014/066503
(87) Numéro de publication internationale: WO 2015/014941

(56) Documents cités:
- EP-A1- 0 962 741
- EP-A1- 1 355 120
- EP-A1- 1 557 358
- WO-A1-2013/083898
- WO-A2-2007/094801
- WO-A2-2011/003965
- FR-A1- 2 850 454
- US-A- 5 372 071
- US-A- 5 402 728

## Description

### Domaine de l'invention

L'invention concerne une séparation linéaire, la plus douce possible, d'un premier élément par rapport à un second élément, qui sont au préalablement liés de façon rigide. Une séparation de deux éléments est connue de WO 2013/083898 A1, qui est considéré comme l'art antérieur le plus proche. L'invention s'applique, de préférence, aux lanceurs spatiaux, pour la séparation des étages entre eux ou d'un étage et de la charge utile, de missiles, de sondes spatiales, voire d'avions, dans le cas d'un largage de charge utile. Cette séparation a pour but de réduire la masse de l'ensemble embarqué, ou de larguer une charge utile. Ces applications se caractérisent par le fait qu'on a besoin de séparer des objets qui peuvent être fragiles, par exemple un satellite, et dont la liaison a eu à subir des charges mécaniques élevées, comme celles subies lors de la propulsion par un lanceur.

### Art antérieur et problème posé

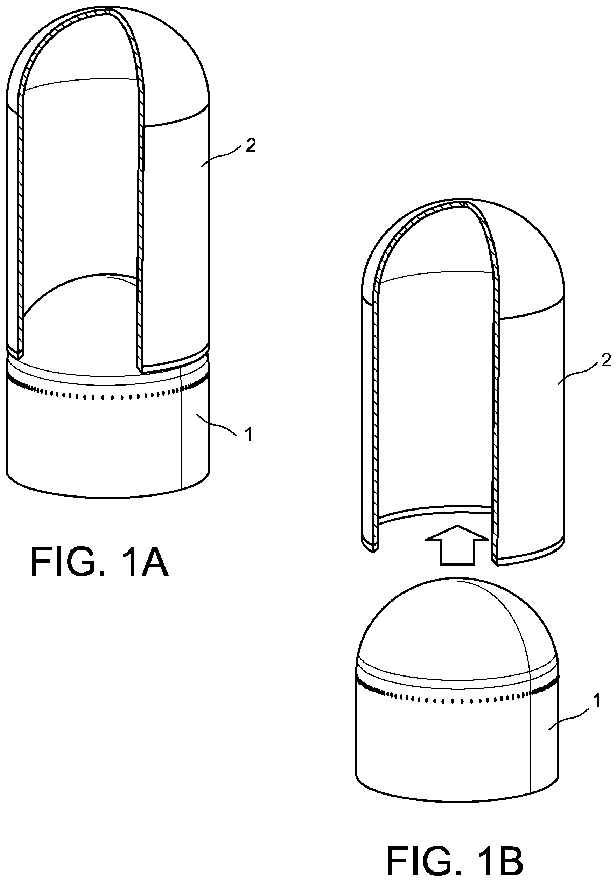

Les Figures 1A et 1B illustrent ce principe de séparation entre deux éléments 1 et 2 d'un lanceur. Le premier élément 1 est, de préférence, un élément de rang n, de préférence, un premier étage moteur. Le deuxième élément est un élément de rang n + 1, soit un deuxième élément moteur, soit une charge utile, par exemple un satellite. La séparation linéaire, dans l'axe du lanceur, doit donc être effectuée sans détérioration de la base du deuxième élément et, dans le cas où on désire récupérer le premier élément 1, sans détérioration de la surface de celui-ci, où se trouvait la liaison entre ces deux éléments 1 et 2.

Dans l'état actuel de la technique, le système de liaison-séparation est principalement de quatre types, qui sont les suivants :
1°) les liaisons par boulonnerie, rivetage et découpe pyrotechnique par pression et élévation de température locale de la structure. Ces systèmes, de par leur fonctionnement, engendrent des débris de matière éjectés. De plus, la découpe provoque un choc important dans la structure, ce qui peut être dommageable pour les charges utiles du lanceur;
   Le document de brevet FR 2 947 808 montre un exemple de mise en oeuvre d'une telle solution.
2°) les liaisons par boulonnerie, rivetage et découpe pyrotechnique par rupture de la structure, par l'intermédiaire de la déformation d'un élément pyrotechnique. Cette solution est la plus employée et n'engendre pas de débris, mais provoque un choc très important ;
3°) les liaisons par boulonnerie pyrotechnique et rupture ou séparation de l'écrou. Ce type de solution engendre beaucoup moins de chocs que les deux précédentes, mais nécessite plusieurs boulons pour passer les efforts d'un élément à l'autre, engendrant donc des risques plus importants de défaillances du fait du nombre de dispositifs impliqués ;
4°) les liaisons par sangle et ruptures de celle-ci par boulons pyrotechniques. Ce type de solution ne permet pas de passer de gros efforts entre les deux éléments et n'autorise pas de diamètres trop importants pour les lanceurs. Dans ce cas également, le relâchement des contraintes provoque un choc important dans les structures.

De manière générale, dans l'état actuel de ces techniques, les systèmes dérivant de ces solutions de liaison-séparation ont la particularité de laisser, la plupart du temps, des aspérités sur la forme extérieure du lanceur, après la séparation.

Le but de l'invention est de remédier aux inconvénients susmentionnés.

### Objets de l'invention

A cet effet, un premier objet principal de l'invention est un procédé de liaison et de séparation de deux éléments liés linéairement l'un à l'autre, par une liaison locale définie, et devant être séparés linéairement de façon certaine, la séparation ayant lieu au niveau ou aux alentours de la liaison, cet échauffement étant déclenché à distance.

Selon l'invention, le procédé consiste :
- à lier les deux éléments au niveau de deux surfaces de liaison respectives correspondantes de ces deux éléments, par des moyens de liaison placés entre deux surfaces de liaison respectives des deux éléments, de la thermite amorçable par une liaison électrique de commande étant placée au moyen de liaison ; et
- déclencher par un ordre électrique ladite thermite pour provoquer, par son seul échauffement, l'échauffement rapide, et non pas l'explosion, et la destruction des moyens de liaison.

Un deuxième objet principal de l'invention est un dispositif de liaison et de séparation de deux éléments liés linéairement l'un à l'autre par une liaison locale définie et devant être séparés linéairement de façon certaine, la séparation ayant lieu au niveau ou aux alentours de la liaison, l'échauffement étant déclenché à distance.

Selon l'invention, il comprend :
- un ensemble placé entre deux surfaces de liaison relatives respectivement des premier et deuxième éléments et comprenant lui-même de façon mélangée :
- des moyens de liaison des deux éléments, à savoir le premier élément et le deuxième élément ;
- de la thermite ; et
- des moyens de déclenchement pyrotechniques à distance de l'ensemble.

Les surfaces de liaison sont, de préférence, celles de deux plaques de liaison respectives du premier élément et du deuxième élément, liées mécaniquement et respectivement au premier élément et au deuxième élément.

La fixation des plaques de liaison sur leur élément respectif se fait par boulonnage.

Une première réalisation des moyens de liaison se fait par collage.

Une deuxième réalisation de ces moyens de liaison se fait par brasage.

La thermite peut être mélangée dans les moyens de liaison formant ainsi un mélange.

Il peut être également placé entre deux couches de ces moyens de liaison.

Une autre réalisation possible de l'ensemble est un empilement de deux couches externes constituées de résine ou de colle entre lesquelles une couche centrale constituée de la thermite mélangée à de la résine ou de la colle.

Le troisième objet principal de l'invention est un lanceur aéronautique comprenant au moins un premier étage porteur dont la paroi est constituée par le premier élément, susnommé ci-dessus, et au moins un étage porté linéairement constituée par le deuxième élément, susnommé ci-dessus, et une pluralité de dispositifs, tels que décrits ci-dessus, répartis sur toute la circonférence du lanceur, entre les deux étages pour les solidariser et les séparer linéairement.

Dans un tel lanceur, il est avantageux qu'une première des deux plaques de liaison présente un talon prenant appui, latéralement par rapport à la liaison, sur la deuxième plaque de liaison.

### Liste des figures

L'invention et ses différentes caractéristiques seront mieux comprises à la lecture de la description suivante, accompagnée de plusieurs figures, représentant respectivement :
- Figures 1A et 1B, un schéma représentant la séparation de deux éléments d'un lanceur;
- Figure 2, un côté du dispositif selon l'invention ;
- Figures 3A et 3B, deux coupes différentes du dispositif selon l'invention dans une première réalisation ;
- Figure 4, en vue cavalière, le dispositif selon l'invention dans cette première réalisation ;
- Figure 5, en coupe, un détail du dispositif selon l'invention dans cette première réalisation ;
- Figures 6A et 6B, deux coupes du dispositif selon l'invention, dans une deuxième réalisation ; et
- Figure 7, en coupe, un détail de cette deuxième réalisation du dispositif selon l'invention.

### Description détaillée de deux réalisations de l'invention

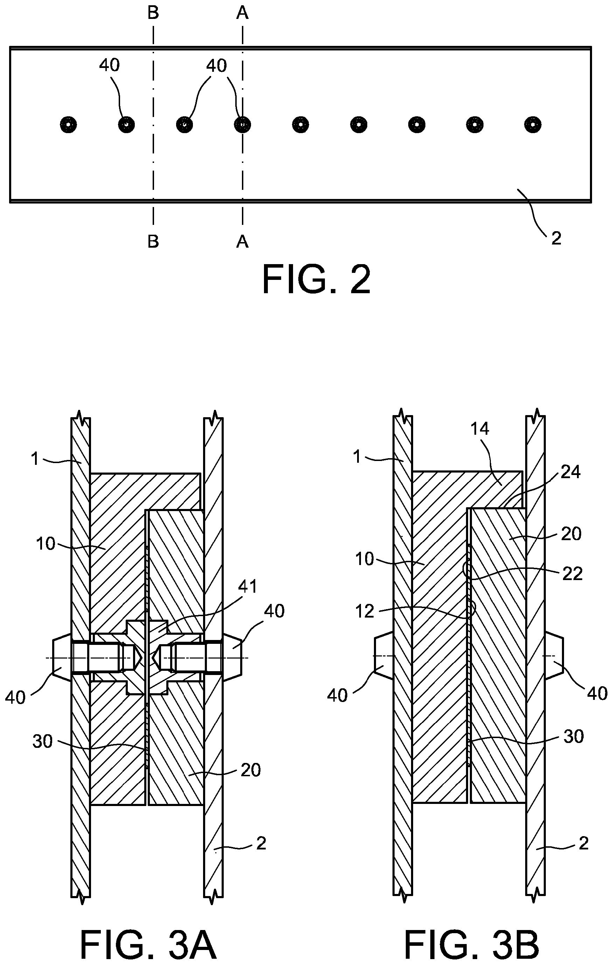

La Figure 2 permet de mieux situer, l'une par rapport à l'autre, les Figures 3A et 3B relatives à la première réalisation décrite de l'invention ; elle sera commentée plus loin.

Sur ces deux figures 3A et 3B, l'élément 1 et l'élément 2, qui sont à assembler et à séparer ensuite, sont représentés chacun par une plaque, qui constitue leur structure respective externe.

Les principaux éléments de liaison des deux éléments 1 et 2 entre eux sont constitués par un mélange 30 contenant un agent de liaison, placé entre deux plaques de liaison 10 et 20, plus exactement entre les surfaces de liaison 12 ou 22 respectives de ces deux plaques de liaison 10 et 20 et des boulons 40 permettant de solidariser chacun des éléments 1 et 2 avec leur plaque de liaison respective 10 et 20.

Les lignes A-A et B-B de la Figure 2 explicite les sections, représentées par les Figures 3A et 3B. En effet, la ligne A-A coupe la structure en passant par des éléments de fixation par boulonnage, à savoir une vis 40. Ainsi, le long de toute la structure à maintenir assembler, puis à séparer, se trouve une pluralité d'éléments de fixation, tels que deux vis 40 vissées chacune à travers l'une des deux structures 1 ou 2, sur laquelle la tête de la vis prend appui. Le vissage de ces vis 40 s'effectue dans des écrous 41 incorporés et fermés dans les plaques de liaison 10 et 20, grâce à un décrochement.

On remarque que la plaque de liaison 10 possède un talon 14 s'étendant latéralement par rapport au sens des structures des éléments 1 et 2, prenant ainsi appui sur une extrémité 24 de l'autre plaque de liaison 20. En effet, dans le cas d'un lanceur aéronautique, voire spatial, les forces tangentielles entre les éléments 1 et 2 peuvent être considérables. En conséquence, pour compléter la fonction de liaison de l'élément liant du mélange 30, le talon 14 de la première plaque de liaison 10 permet de reprendre une grande partie des efforts longitudinaux transmise entre les deux éléments 1 et 2.

La ligne B-B ne coupe pas ces éléments de fixation. Ainsi la Figure 3B ne représente que la tête des deux vis 40 qui dépassent par rapport à l'ensemble de la structure.

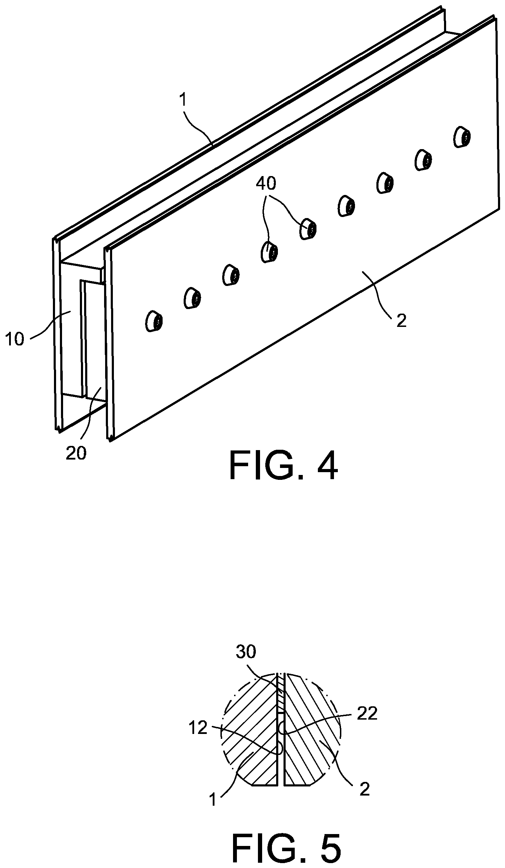

La Figure 4 montre l'ensemble en perspective, notamment les deux éléments 1 et 2, les deux plaques de liaison 10 et 20 qui leur sont relatives et des têtes des vis 40.

La Figure 5 montre que le mélange 30 est bien intercalé entre la surface de liaison 12 de la plaque de liaison 10 et la surface de liaison 22 de la plaque de liaison 20.

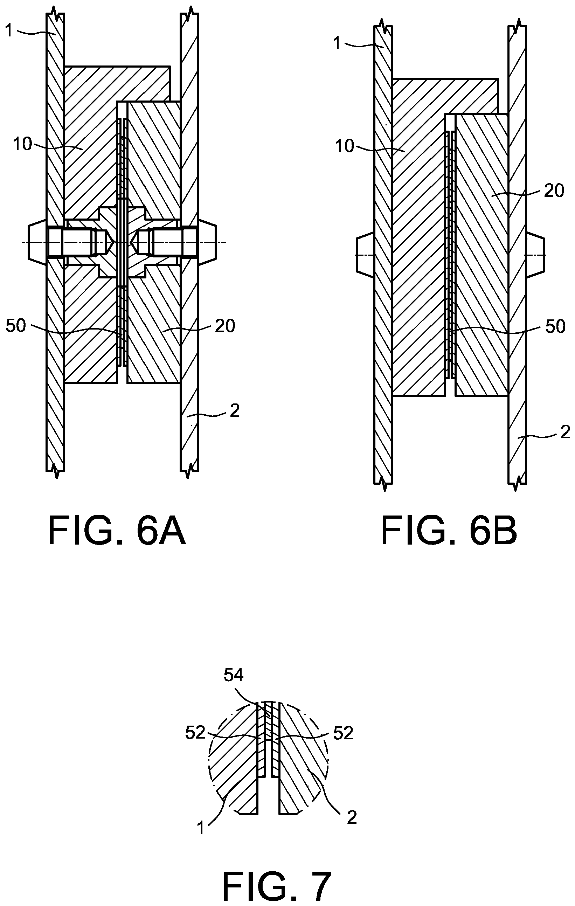

Les Figures 6A et 6B sont relatives à une deuxième réalisation de l'invention et correspondent aux Figures 3A et 3B. On y retrouve donc le premier élément 1, le deuxième élément 2, leurs plaques de liaison respectives 10 et 20 et les moyens d'assemblage de ces éléments, sous la forme de vis 40. Par contre, la liaison entre les deux plaques de liaison 10 et 20 est réalisée par un empilement 50.

Ce dernier est détaillé par la Figure 7. Il est constitué, dans cet exemple, de deux couches externes 52 constituées de résine ou de colle, renfermant ou prenant en sandwich une couche de thermite, mélangée à de la résine ou de la colle.

Les éléments 1 et 2 sont, dans l'application préférentielle de l'invention, pour le premier élément 1 un étage de lanceur aérospatiale ou aéronautique de rang n, sur l'extrémité duquel est fixé le deuxième élément 2, qui est soit un deuxième étage de lanceur de rang n + 1, de lanceur, soit une charge opérationnelle, par exemple contenant du matériel ou une installation à mettre sur orbite.

Pour réaliser l'immobilisation des deux éléments 1 et 2, ces derniers sont portés à la température de fusion de la brasure ou de la colle utilisées pour cet assemblage. Par exemple, si ces structures à assembler sont réalisées en titane et que la brasure choisie est un alliage d'argent, l'ensemble de la zone à assembler est porté à la température de fusion de l'alliage d'argent, soi environ 960°C. Pour ce faire, on choisit plusieurs méthodes classiques, par exemple le brasage par induction, le brasage par chauffage au four, sous atmosphère neutre, ou le brasage par résistance. Pour l'assemblage concerné par la présente invention, on note que le brasage par induction, ou le brasage par résistance sont plus adaptés pour les grands volumes. Le brasage étant réalisé, les moyens de chauffage sont retirés et la liaison est alors fonctionnelle.

Le mélange 30 contient donc des moyens de chauffage, qui sont constitués par de la thermite, de préférence, de la thermite gainée (définition de thermite : mélange d'un combustible métallique pouvant souvent être l'aluminium, mais pas uniquement, et d'un oxydant, souvent un oxydant métallique). Ce type de matériau, par réaction d'oxydoréduction exothermique, produit des températures de l'ordre de 1800°C. On précise que les moyens de liaison sont placés autour de l'ensemble de la liaison, c'est-à-dire sur la périphérie de l'ensemble du premier élément 1 et du second élément 2, de préférence un lanceur aéronautique.

Pour effectuer la séparation de l'élément 1 et 2, il faut déclencher le mélange 30 placé entre les deux plaques de liaison 10 et 20. Des moyens de déclenchement pyrotechnique à distance, non représentés sur ces Figures, sont donc utilisés.

Dans le cas de deux éléments d'un lanceur aérospatial, les premier élément 1 et deuxième élément 2 sont placés intentionnellement sous pression. De ce fait, lors du déclenchement pyrotechnique, ils vont s'éloigner l'un de l'autre, sous l'effet de bouchon de champagne, selon l'axe linéaire de l'ensemble. Dans le cas où il n'y a pas de pression à l'intérieur des deux éléments, ou entre les structures, l'éloignement peut se faire par tout autre moyen connu, tel que des ressorts, des fusées d'éloignement, des moyens pneumatiques ou autres.

Après la désolidarisation du premier élément et du deuxième élément, la structure intérieure du deuxième élément retrouve une surface sans protubérance, ni arrachement.

De plus, l'invention répond à une disposition de l'Article 5 de la Loi relative aux Opérations Spatiale (LOS), relative aux Opérateurs de lancement de satellites, afin d'assurer la protection de l'environnement de l'espace extra-atmosphérique, notamment en vue de limiter les risques liés aux débris spatiaux.

## Revendications

1. Procédé de liaison et de séparation de deux éléments, un premier élément (1) et un deuxième élément (2) liés linéairement l'un à l'autre au moyen d'une liaison locale définie et devant être séparés de façon certaine, la séparation ayant lieu au niveau ou à l'entour de la liaison, l'échauffement étant déclenché à distance,
**caractérisé en ce qu'**il comprend les étapes suivantes :
- lier les premier et deuxième éléments (1, 2) au niveau de deux surfaces de liaison (12, 22), respectives et correspondantes du premier élément (1) et du deuxième élément (2), avec des moyens de liaison placés entre ces deux surfaces de liaison (12, 22), de la thermite amorçable par une liaison électrique de commande étant placée dans les moyens de liaison ; et
- déclencher par un ordre électrique ladite thermite pour provoquer, par son seul échauffement, l'échauffement rapide et la destruction des moyens de liaison.

2. Dispositif de liaison et de séparation de deux éléments, un premier élément (1) et un deuxième élément (2) liés l'un à l'autre par une liaison locale définie et devant être séparés de façon certaine, la séparation ayant lieu au niveau de la liaison, cet échauffement étant déclenché à distance,
**caractérisé en ce qu'**il comprend :
- un ensemble placé entre deux surfaces de liaison relatives (12, 22), respectivement des premier et deuxième éléments (1, 2) comprenant lui-même de façon mélangée :
• des moyens de liaison des deux éléments, à savoir le premier élément (1) et le deuxième élément (2) ; et
• de la thermite ;
- des moyens de déclenchement pyrotechniques à distance de l'ensemble.

3. Dispositif selon la revendication 2, **caractérisé en ce que** les surfaces de liaison (12, 22) sont celles de deux plaques de liaison (10, 20), respectives du premier élément (1) et du deuxième élément (2), ces surfaces étant liées mécaniquement et respectivement au premier élément (1) et deuxième élément (2).

4. Dispositif selon la revendication 3, **caractérisé en ce qu'**une des deux plaques de liaison (10) présente un talon (14) prenant appui, latéralement par rapport à la liaison des deux éléments, sur la deuxième plaque de liaison (12).

5. Dispositif selon la revendication 3, **caractérisé en ce que** les plaques de liaison (10 et 12) sont fixées à leur élément respectif (1, 2) par boulonnage.

6. Dispositif selon la revendication 2, **caractérisé en ce que** la thermite est mélangée dans les moyens de liaison, formant un mélange (30).

7. Dispositif selon la revendication 2, **caractérisé en ce que** la thermite est placée entre deux couches de moyens de liaison.

8. Dispositif selon la revendication 2, **caractérisé en ce que** les moyens de liaison sont constitués par de la colle.

9. Dispositif selon la revendication 2, **caractérisé en ce que** les moyens de liaison sont constitués par un brasage.

10. Dispositif selon la revendication 2, **caractérisé en ce que** la thermite est mélangée à un matériau choisi dans le groupe comprenant de la colle et de la résine pour constituer une couche centrale (54), et est placé entre deux couches externes (52) constituées chacune d'un matériau choisi dans le groupe comprenant la résine et la colle, cet ensemble (50) étant placé entre les plaques de liaison (10, 20).

11. Lanceur aéronautique comportant un premier étage porteur et un deuxième étage porté par le premier étage porteur, liés linéairement et devant être séparés linéairement, le lanceur comprenant une pluralité de dispositifs selon l'une des revendications 2 à 9, répartie sur toute la circonférence du lanceur, entre deux les étages, pour solidariser et séparer ces étages, le premier élément (1) étant la paroi du premier étage porteur, le deuxième élément (2) étant la paroi du deuxième étage porté.

## Patentansprüche

1. Verfahren zum Verbinden und Trennen von zwei Elementen, eines ersten Elements (1) und eines zweiten Elements (2), die linear miteinander mit Hilfe einer definierten lokalen Verbindung verbunden sind und sicher getrennt werden müssen, wobei die Trennung im Bereich oder in der Umgebung der Verbindung stattfindet, wobei die Erhitzung aus der Ferne ausgelöst wird,
**dadurch gekennzeichnet, dass** es die folgenden Schritte umfasst:
- Verbinden der ersten und zweiten Elemente (1, 2) im Bereich von zwei jeweiligen und entsprechenden Verbindungsflächen (12, 22) des ersten Elements (1) und des zweiten Elements (2) mit Verbindungsmitteln, die zwischen diesen beiden Verbindungsflächen (12, 22) angeordnet sind, wobei Thermit, das durch eine elektrische Verbindung zur Steuerung initiiert werden kann, in den Verbindungsmitteln angeordnet ist; und
- Auslösen des Thermits durch einen elektrischen Befehl, um nur durch seine Erhitzung die rasche Erhitzung und die Zerstörung der Verbindungsmittel hervorzurufen.

2. Vorrichtung zum Verbinden und Trennen von zwei Elementen, eines ersten Elements (1) und eines zweiten Elements (2), die linear miteinander mit Hilfe einer definierten lokalen Verbindung verbunden sind und sicher getrennt werden müssen, wobei die Trennung im Bereich der Verbindung stattfindet, wobei diese Erhitzung aus der Ferne ausgelöst wird,
**dadurch gekennzeichnet, dass** sie umfasst:
- eine Einheit, die zwischen zwei relativen Verbindungsflächen (12, 22) der ersten bzw. zweiten Elemente (1, 2) angeordnet ist, umfassend selbst auf gemischte Weise:
• Mittel zum Verbinden der beiden Elemente, nämlich des ersten Elements (1) und des zweiten Elements (2); und
• Thermit;
- pyrotechnische Fernauslösemittel der Einheit.

3. Vorrichtung nach Anspruch 2, **dadurch gekennzeichnet, dass** die Verbindungsflächen (12, 22) jene von zwei jeweiligen Verbindungsplatten (10, 20) des ersten Elements (1) und des zweiten Elements (2) sind, wobei diese Flächen mechanisch mit dem ersten Element (1) bzw. dem zweiten Element (2) verbunden sind.

4. Vorrichtung nach Anspruch 3, **dadurch gekennzeichnet, dass** eine der beiden Verbindungsplatten (10) eine Ferse (14) aufweist, die seitlich in Bezug zur Verbindung der beiden Elemente auf der zweiten Verbindungsplatte (12) aufliegt.

5. Vorrichtung nach Anspruch 3, **dadurch gekennzeichnet, dass** die Verbindungsplatten (10 und 12) an ihrem jeweiligen Element (1, 2) durch Bolzen befestigt sind.

6. Vorrichtung nach Anspruch 2, **dadurch gekennzeichnet, dass** das Thermit in die Verbindungsmittel gemischt wird, wobei ein Gemisch (30) gebildet wird.

7. Vorrichtung nach Anspruch 2, **dadurch gekennzeichnet, dass** das Thermit zwischen zwei Schichten von Verbindungsmitteln angeordnet wird.

8. Vorrichtung nach Anspruch 2, dadurch gekenntzeichnet, dass die Verbindungsmittel von Klebstoff gebildet sind.

9. Vorrichtung nach Anspruch 2, **dadurch gekennzeichnet, dass** die Verbindungsmittel von einer Lötstelle gebildet sind.

10. Vorrichtung nach Anspruch 2, **dadurch gekennzeichnet, dass** das Thermit zu einem Material gemischt wird, das in der Gruppe, umfassend Klebstoff und Harz, ausgewählt ist, um eine zentrale Schicht (54) zu bilden, und zwischen zwei Außenschichten (52) angeordnet wird, die jeweils von einem Material gebildet sind, das in der Gruppe, umfassend Harz und Klebstoff, ausgewählt ist, wobei diese Einheit (50) zwischen den Verbindungsplatten (10, 20) angeordnet wird.

11. Trägerrakete, umfassend eine erste Trägerstufe und eine zweite Stufe, die von der ersten Trägerstufe getragen wird, die linear verbunden sind und linear getrennt werden müssen, wobei die Trägerrakete eine Vielzahl von Vorrichtungen nach einem der Ansprüche 2 bis 9 umfasst, die auf dem gesamten Umfang der Trägerrakete zwischen den beiden Stufen verteilt sind, um diese Stufen zu verbinden und zu trennen, wobei das erste Element (1) die Wand der ersten Trägerstufe ist, wobei das zweite Element (2) die Wand der zweiten getragenen Stufe ist.

## Claims

1. A method for connecting and separating two elements, a first element (1) and a second element (2) linearly connected to each other by means of a defined local connection and that have to be securely separated, the separation occurring at or near the connection, the warming-up being remotely triggered,
**characterised in that** it comprises the following steps of:
- connecting the first and second elements (1, 2) at two respective and corresponding connecting surfaces (12, 22) of the first element (1) and the second element (2), with connecting means placed between both these connecting surfaces (12, 22), wherein thermite inflammable by an electrical control connection is placed in the connecting means; and
- triggering by an electrical command said thermite to cause, only by its warming-up, the quick warming-up and destruction of the connecting means.

2. A device for connecting and separating two elements, a first element (1) and a second element (2) connected to each other by a defined local connection and that have to be securely separated, the separation occurring at the connection, this warming-up being remotely triggered,
**characterised in that** it comprises:
- an assembly placed between two relative connecting surfaces (12, 22), of the first and second elements (1, 2) itself respectively comprising, in a mixed manner:
• means for connecting both elements, that is the first element (1) and the second element (2); and
• thermite;
- means for remotely pyrotechnically triggering the assembly, for triggering the thermite and, consequently, the quick warming-up and destruction of the connecting means.

3. The device according to claim 2, **characterised in that** the connecting surfaces (12, 22) are those of two connecting plates (10, 20), of the first element (1) and the second element (2) respectively, these surfaces being mechanically connected to the first element (1) and the second element (2) respectively.

4. The device according to claim 3, **characterised in that** one of both connecting plates (10) has a land (14) pressing, laterally to the connection of both elements, against the second connecting plate (12).

5. The device according to claim 3, **characterised in that** the connecting plates (10 and 12) are attached to their respective elements (1, 2) by bolting.

6. The device according to claim 2, **characterised in that** the thermite is mixed in the connecting means, forming a mixture (30).

7. The device according to claim 2, **characterised in that** the thermite is placed between two layers of connecting means.

8. The device according to claim 2, **characterised in that** the connecting means consist of glue.

9. The device according to claim 2, **characterised in that** the connecting means consist of soldering.

10. The device according to claim 2, **characterised in that** the thermite is mixed to a material chosen from the group comprising glue and resin to make up a centre layer (54), and is placed between two outer layers (52) each consisting of a material chosen from the group comprising resin and glue, this assembly (50) being placed between the connecting plates (10, 20).

11. An aeronautic launcher comprising a first carrier stage and a second stage carried by the first carrier stage, linearly connected and that have to be linearly separated, the launcher comprising a plurality of devices according to claim 2 to 9, distributed over the entire circumference of the launcher, between both stages, to secure and separate these stages, the first element (1) being the wall of the first carrier stage, the second element (2) being the wall of the second carried stage.
